# EUROPEAN PATENT APPLICATION

(11) **EP 4 628 622 A1**
(43) Date of publication of application: **08.10.2025**
(21) Application number: 25167830.6
(22) Date of filing: 01.04.2025
(51) Int. Cl.: C23C 4/11, C04B 41/50, C04B 41/87, C23C 4/134

(54) **ENCAPSULATED PARTICLES FOR MAINTAINING PARTICLE CHEMISTRY DURING PLASMA SPRAY APPLICATIONS**

(30) Priority: 05.04.2024 US 202418628256
(71) Applicant: RTX Corporation, Farmington, CT 06032 (US)
(72) Inventor: ZAHED, Nizar B., Glastonbury, 06033 (US); GOMEZ, Juan, El Paso, 79902 (US)
(74) Representative: Dehns

(57) **Abstract**

Powder compositions are having core-shell structures for use in forming environmental barrier coatings (EBCs) and/or abradable coatings by atmospheric plasma spraying. The shell compositions and thicknesses are selected to provide inner core particle (20) (silicate or phosphate particle) protection from the plasma and plume environments during atmospheric plasma spraying and avoid undesired modification to the particle chemistry during the deposition process. Shell coats (10) can be designed to survive the plasma and plume environments during atmospheric plasma spraying. Alternatively, shell coats (10) can be designed to be consumed during atmospheric plasma spraying.

## Description

### Field of the Invention

The present disclosure relates generally to methods for preparing particles and powders for use in the preparation of abradable coatings, as well as the preparation of environmental barrier coatings (EBCs) for protection of ceramic matrix materials (CMCs). The present disclosure further relates to the use of such particles/powders for the preparation of abradable coatings or the preparation of EBCs.

### Background

Turbomachinery, such as gas turbine engines, have components that are expose to hostile environments due high temperatures. Such components often include a substrate made from ceramic matrix materials (CMCs) which have the capability of withstanding high temperatures. These components may also further include environmental barrier coatings (EBCs) applied to the surface of the substrate to protect the substrate from corrosive forces due to, for example, exposure to high temperature water vapor.

Additionally, some components used in gas turbine engines, such as rotors with one or more rows of rotating blades, are positioned within the gas turbine engine in close proximity to a stationary surface which is, or acts as, a seal to avoid leakage. For example, in operation, blade tips and the seals are configured to come into contact so as to avoid/minimize leakage of gas or other working fluid around the blade tips to thereby increase engine efficiency.

Due to this contact, the blade tips act as an abrading component with respect to the seals. For this reasons, the seals are provided with an abradable coating. However, if the abradable coating is too hard, damage to the blade tips can result during engine operation. Such damage can be extremely detrimental to the operational lifespan of the engine and the safety of operation. Therefore, generally, the blade tip materials are harder than those used for the abradable coating. With the blade tip materials being harder, the blade tips will abrade or cut into the abradable coating during those portions of the engine operating cycle when the blade tip contacts the abradable seal.

In addition to abradable coatings, components may also be provided with EBC coatings for provide protection. For example, EBC coatings can be applied to components, such as seals, that are used in high temperature locations, such as the high pressure turbine stages aft of the combustor. For this reason, both coatings that exhibit suitable abradability and coatings that exhibit high temperature durability are desirable in the design of jet engines.

Both EBCs and abradable coatings can be multilayered. For example, an EBC can comprise a bond coat, which may be single layered or multilayered, to, among other things, promote adhesion between the substrate and a top coat which provides protection for the substrate. In addition, the top coat also may be single layered or multilayered. For example. The abradable coating may comprise a bond coat to promote adhesion to the substrate, in addition to a porous, abradable coating.

EBCs and abradable coatings can be applied to substrates by a variety of processes such as air or atmospheric plasma spraying, low pressure plasma spraying, and electron beam physical vapor deposition. Air plasma spraying is a cost effective process for applying coatings from silicate or phosphate powders. However, this deposition process is stochastic, and controls for the deposition process are limited, leading to a lack of precision/homogeneity for the coating. As a result, abradability and other properties of the resultant coating can vary locally.

When forming EBC and abradable coatings by applying silicate particles, such as Hf-silicates, Zr-silicates, Y-silicates, and Yb-silicates, by plasma spraying, the silicate particles become molten during particle flight. As a result, the particles can be subject to volatilization and oxidation of Si while the particles are in a molten state. This in turn can lead to the resultant coatings being Si-depleted. Such Si-depleted coatings exhibit non-stoichiometric silicate and oxide formations which alter the final coating properties. Regions of altered chemistry within the coating pose a risk to property compatibility in the coating system, thereby adversely impacting coating performance and, in the case of abradable coatings, leading to possible blade tip damage.

In addition to silicate powders, rare earth (e.g., Sc, Y, La, Ce, Gd, Yb, etc.) based orthophosphates (PO₄) have been suggested for EBC coatings due to their close coefficient of thermal expansion (CTE) match with SiC based CMCs. However, as with silicates, these phosphates also suffer similar disassociation during spay processing which is linked to loss of phosphate which in turn can adversely impact coating properties.

Therefore, the need exists to provide silicate and phosphate powders that will be resistant to adverse chemistry variations occurring to particles in flight during air plasma spraying. Further, there continues to be a need to provide materials for production of abradable coatings and ECB coatings that enhance the properties of the resultant coatings and/or facilitate the manufacture thereof.

### Summary of the Invention

In general, the present disclosure relates to providing silicate or phosphate particles with a protective coating that will aid in the preservation of the particle's chemistry during air plasma spraying to produce silicate or phosphate powders that can provide coatings with more uniform chemistry.

According to one aspect of the present disclosure, there is provided a powder composition comprising:
particles having a core-shell structure with an inner core particle and an outer shell wherein, in each case,
the inner core particle is a Hf-silicate (HfSiO₄), a Zr-silicate (ZrSiO₄), a rare earth monosilicate (RE₂SiO₅), a rare earth disilicate (RE₂Si₂O₇), or a rare earth phosphate (REPO₄) particle, wherein RE is Sc, Y, La, Ce, Pr, Nd, Pm, Sm, Eu, Gd, Tb, Dy, Ho, Er, Tm, Yb, or Lu, and
the outer shell provides protection of the inner core particle from plasma and plume environments during air plasma spraying.

According to a further aspect of the present disclosure, there is provided a method of preparing a particulate composition comprising:
preparing particles having a core-shell structure with an inner core particle and an outer shell wherein, in each case,
   the inner core particle is a Hf-silicate (HfSiO₄), a Zr-silicate (ZrSiO₄), a rare earth monosilicate (RE₂SiO₅), a rare earth disilicate (RE₂Si₂O₇), or a rare earth phosphate (REPO₄) particle, wherein RE is Sc, Y, La, Ce, Pr, Nd, Pm, Sm, Eu, Gd, Tb, Dy, Ho, Er, Tm, Yb, or Lu, and
   the outer shell provides protection of the inner core particle from plasma and plume environments during air plasma spraying: and
subjecting the particles having a core-shell structure to air plasma spraying to produce a particulate composition wherein particles of the particulate composition optionally contain at least a portion of the outer shell of the particles.

According to another aspect of the present disclosure, there is provided a method for applying a silicate-based or phosphate-based coating to a substrate comprising:
coating a substrate by subjecting a powder composition containing silicate or phosphate particles to air plasma spraying,
wherein the particles have a core-shell structure comprising an inner core particle and an outer shell wherein, in each case,
the inner core particle is a Hf-silicate (HfSiO₄), a Zr-silicate (ZrSiO₄), a rare earth monosilicate (RE₂SiO₅), a rare earth disilicate (RE₂Si₂O₇), or a rare earth phosphate (REPO₄) particle, wherein RE is Sc, Y, La, Ce, Pr, Nd, Pm, Sm, Eu, Gd, Tb, Dy, Ho, Er, Tm, Yb, or Lu, and
the outer shell provides protection of the core particle from plasma and plume environments during air plasma spraying.

In some examples, the outer shell of the particles having a core-shell structure have a composition and/or thickness such that at least part of the outer particle shell will survive air plasma spraying.

In examples where at least part of the outer particle shell will survive air plasma spraying, the outer shell composition can comprise a polymer, a metal, or a ceramic. For example, the outer shell composition can comprise a polyester, poly(methyl methacrylate), Al, a rare earth metal, BN, Al₂O₃, or a rare earth oxide.

In some examples, the outer shell of the particles having a core-shell structure have a composition and/or thickness such that the outer particle shell is consumed during air plasma spraying.

In examples where the outer shell of the particles having a core-shell structure is consumed, the outer shell composition can comprise a polymer, a metal, or a ceramic. For example, the outer shell composition can comprise a polyester, poly(methyl methacrylate), Si, or SiO₂.

In some examples, the particles with a core-shell structure have a nominal diameter of 20 to 150 µm. Additionally, in some examples the outer shell of the particles has a thickness of 2-25 µm. Further, in some examples, the outer shell makes up less than 40 vol.% of the total volume of the particle.

### Brief Description of the Drawings

Implementations of the inventive concepts disclosed herein may be better understood when consideration is given to the following detailed description thereof. Such description make refers to the included drawings, which are not necessarily to scale, and which some features may be exaggerated and some features may be omitted or may be represented schematically in the interest of clarity. Like reference numerals in the drawings may represent and refer to the same or similar element, feature, or function. In the drawings:
Figure 1 is a cross-sectional view of a core-shell particle having an inner core particle and an outer shell.
Figure 2 is a cross-sectional view of an abradable coating prepared by air plasma spraying using core-shell articles of the present disclosure.
Figure 3 is a depiction of an air plasma spraying deposition process.

### Detailed Description

Before explaining embodiments of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

In general, embodiments of the present disclosure include providing a powder composition in which the particles of the powder have a core and shell structure comprising an inner core silicate or phosphate particle and an outer shell that provides protection for the inner core particle during air plasma spraying. The protective shell can be designed so as to be consumed during air plasma spraying or the protective shell can be designed so that at least a portion of the shell material survives air plasma spraying and is incorporated into the resultant coating produced by the air plasma spraying deposition process.

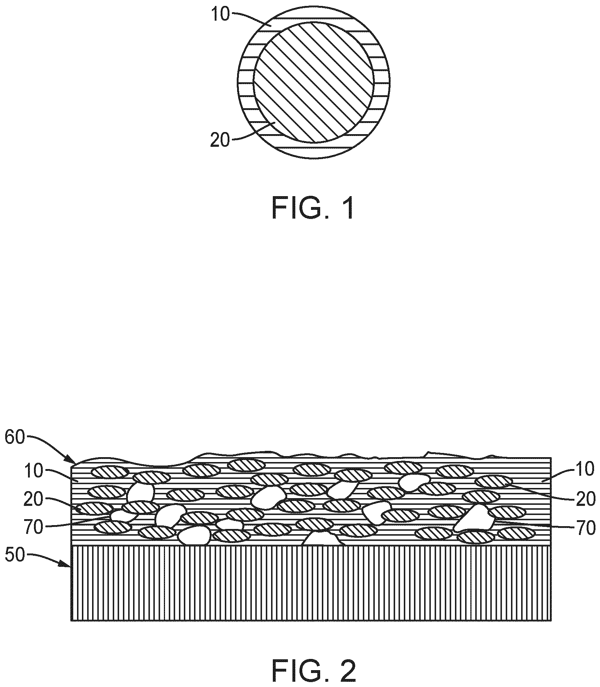

Fig. 1 depicts a particle having a core and shell structure in accordance with the present disclosure. The outer shell 10 can be made, for example, from polymers, metals, or ceramics. Inner core particle 20 is made from silicates or phosphates. While Fig.1 shows a spherical inner core particle 20, this particle can actually be of irregular shape (e.g., having aspects ratios appreciably higher than 1). Similarly, while Fig.1 shows the outer shell 10 uniformly surrounding the inner core particle 20, the shell coating can be non-uniform. Also, while an outer shell that completely surrounds the inner core particle can be desirable for protecting the inner core particle, partial shell coatings may be suitable in certain embodiments. In other words, the shell does not necessary need to fully engulf the core. Also, it is possible for the shell to be porous. Similarly, the core can also be porous.

Suitable silicate materials for the inner core particles are, for example, Hf-silicate (HfSiO₄), Zr-silicate (ZrSiO₄), rare earth monosilicates (RE₂SiO₅), and rare earth disilicates (RE₂Si₂O₇), where RE is a rare earth metal selected from Sc, Y, La, Ce, Pr, Nd, Pm, Sm, Eu, Gd, Tb, Dy, Ho, Er, Tm, Yb, and Lu. Suitable phosphate materials for the inner core particles are, for example, rare earth phosphates (REPO₄), where RE is a rare earth metal selected from Sc, Y, La, Ce, Pr, Nd, Pm, Sm, Eu, Gd, Tb, Dy, Ho, Er, Tm, Yb, and Lu, for example, Lu, Yb, Er, Y, or Sc.

The outer shell can be made from various materials. Shell materials and shell thicknesses can be selected so as to provide the inner core particles with the desired protection from the plasma and plume environments during air plasma spraying. In some embodiments, the shell material and/or the thickness thereof are selected to provide a consumable outer shell, i.e., the outer shell is designed to be consumed during air plasma spraying while providing protection of the inner core particles. In other embodiments, the shell material and/or the thickness thereof are designed so that at least a portion of the shell material survives air plasma spraying and is incorporated into the resultant coating.

In some embodiments, the shell materials comprises a polymer such as polyester or poly(methyl methacrylate) (PMMA). Polymers with higher melting points like polyesters can be advantageous since lower melting point polymers may volatize too quickly during air plasma spraying. The shell material may also comprise a metal such as Al, a rare earth metal, or a refractory metal that decomposes quickly upon oxidation, e.g., Mo and Nb. Additionally, the shell material may comprise a ceramic that can decompose quickly during particle flight in plasma spraying such as BN, Al₂O₃, SiO₂, or ceramics that are rich silica and/or phosphate, e.g., combinations of silica and/or phosphate with rare earth oxide(s), Hf oxide, or Zr oxide. For example, the ceramic can be a mixture containing up to 30 mol % rare earth oxide, Hf oxide, or Zr oxide, with the remainder being silica or phosphate. In still other embodiments, combinations of these materials can be used such as a combination of metal and ceramic.

The inclusion or exclusion of shell materials in the final coating may be desirable to enhance or preserve, respectively, properties of the final coating. For example, in some embodiments, the particles are designed to provide abradable coatings. In such embodiments, it can be advantageous to select shell materials and/or shell thicknesses such that at least a portion of the outer shell survives air plasma spraying. The incorporation of the shell materials, e.g., polyester or YPO₄, into the final coating can enhance the abradability thereof. Suitable shell materials for powders intended to provide abradable coatings include polymers (e.g., polyester, poly(methyl methacrylate) (PMMA)), metals (e.g., Al, rare earth metal), and ceramics (e.g., BN, Al₂O₃, a mixture of silica or phosphate and rare earth oxide(s)).

In some embodiments, the particles are designed to provide a layer for use in an EBC coating. In such embodiments, it may be advantageous to select shell materials and/or shell thicknesses such that the outer shell is consumed (e.g., volatized) during air plasma spraying. In such cases, the inclusion of shell material in the final coating may adversely impact the desired properties of the final coating. Suitable shell materials for providing EBC layers include polymers (e.g., polyester, poly(methyl methacrylate) (PMMA)) and ceramics (e.g., SiO₂).

Particle size for the core and shell particles can vary widely. In general, the total particle (core and shell) have a nominal diameter of greater than 15 µm and less than 200 µm, for example, 20 to 150 µm or 20 to 60 µm.

As noted above, the shell thickness can be varied to provide the desired level of protection for the inner core particle, and depending on whether it is desirable to have shell material incorporated into the final coating. Further, the shell thickness will depend on the selected shell material, for example, polyester shells could be relatively thick whereas silica shells could be relatively thin (e. g., around 1µm). For example, in some embodiments the outer shell can have a thickness of 2-25 µm, for example, 2-10 µm. In some embodiments, the outer shell makes up to 40 vol.% of the total volume of the particle. In some embodiments, the outer shell makes up 5 to 20 vol.% of the total volume of the particle. In general, the overall thickness (shell plus core) is greater than 15 µm and less than 200 µm.

In some embodiments, the inner core particle is a Hf-silicate (HfSiO₄) or Zr-silicate (ZrSiO₄) particle. In other embodiments, the inner core particle is a rare earth monosilicate (RE₂SiO₅) or rare earth disilicate (RE₂Si₂O₇), e.g. Yb₂SiO₅ and Yb₂Si₂O₇. Still, in other embodiments, the inner core particle is a rare earth phosphate (REPO₄), e.g., YPO₄.

By way of example, for abradable coating the shell and core particles according to the present disclosure can have cores selected from HfSiO₄, ZrSiO₄, Yb₂Si₂O₇, ScPO₄, YbPO₄, and YPO₄, and shells selected from SiO₂, polyester, a silica-rich mixture with HfSiO₄, ZrSiO₄, or Yb₂Si₂O₇, a phosphate-rich mixture with YPO₄, a metal, and BN. For EBC coatings the shell and core particles can have cores selected from HfSiO₄, ZrSiO₄, Yb₂Si₂O₇, and YPO₄, and shells selected from SiO₂, polyester, a silica-rich mixture with HfSiO₄, ZrSiO₄, or Yb₂Si₂O₇, and a phosphate-rich mixture with YPO₄.

The shell coating can be applied to the core particles using various methods. For example, the shell coatings can be applied by solvent coating, cladding, slurry processing, or thermal spraying.

Regarding a method aspect of the present disclosure, in some embodiments the method comprises applying a coating to a substrate by air plasma spraying using powders containing core and shell particles as described above. For example, the method can comprise coating a CMC substrate, such as SiC based CMCs (e.g., an SiC/SiC CMC), with an EBC coating or an abradable coating using powders containing core and shell particles as described above. In other embodiments, the method comprises applying an abradable coating to a substrate intended for use as a seal in a gas turbine engine wherein the seal will come into contact with rotor blade tips.

In some embodiments, the method is performed so that at least a portion of the outer shell materials survive the plasma and plume environment during the atmospheric plasma spraying and these shell materials are incorporate into the resultant coating. In other embodiments, the method is performed so that the outer shell are consumed (e.g., volatized) in the plasma and plume environment during the atmospheric plasma spraying so as to prevent these shell materials from being incorporated into the resultant coating.

When using particles without protective coatings, the plasma and plume environments formed during the atmospheric plasma spraying can cause the silicate or phosphate particles to undergo volatilization leading to changes in the particle chemistry and ultimately regions of undesirable chemistry in the final coating. The presence of the shell coating inhibits particle volatilization.

The inner core particles used in the method are, for example, Hf-silicate (HfSiO₄), Zr-silicate (ZrSiO₄), rare earth monosilicates (RE₂SiO₅), rare earth disilicates (RE₂Si₂O₇), or rare earth phosphates (REPO₄), where RE is a rare earth metal selected from Sc, Y, La, Ce, Pr, Nd, Pm, Sm, Eu, Gd, Tb, Dy, Ho, Er, Tm, Yb, and Lu. the materials used for the outer shell in the method are, for example, polymers such as polyester or poly(methyl methacrylate) (PMMA), metals such as Al or a rare earth metal, or ceramics such as BN, Al₂O₃, or silica-rich mixture with HfSiO₄, ZrSiO₄, or Yb₂Si₂O₇. It is also possible to use combinations of these materials as the shell materials.

Fig. 2 shows a cross section of a CMC substrate 50 having an abradable coating 60 applied thereto using the core and shell particles described herein using atmospheric plasma spraying. The inner core particles 1 become to some degree molten during the atmospheric plasma spraying process and are deposited onto the substrate as so-called splats. In the embodiment of Fig. 2, at least a portion of the shell material 10 survives the atmospheric plasma spraying process and is incorporated into the final coating. Also, the coating has a certain porosity represented by pores 70. This porosity enhances the abradability of the coating.

For example, the porosity can be 20% or higher. In some embodiments, the porosity can be up to 50% Further, porosity can be adjusted through the incorporation of auxiliary agents in the coating such as a polymer particles. For example, a fugitive material can be incorporated into the abradable coating and then subsequently baked out to provide a desired porosity.

As noted above, the selection of shell materials and shell thicknesses can be used to adjust desired properties of the final coating. Additionally, parameters associated with atmospheric plasma spraying such as gas flow rates, powder feed rate, and current can be used to adjust temperature and particle velocity which in turn can be used to vary the formation of the final coating on the substrate.

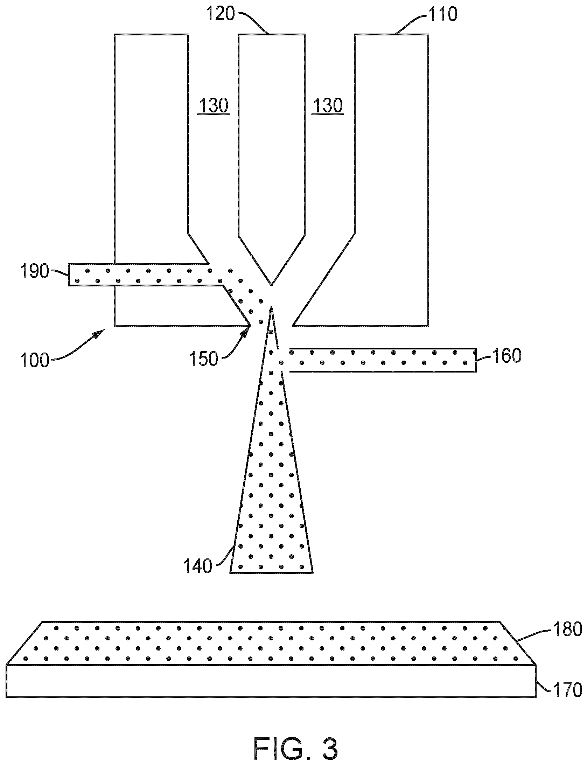

As shown in Fig. 3, an air plasma spray torch or air plasma spray gun 100 has an anode 110 and a cathode 120. An electric arc is created between cathode 110 and an anode 120. Gas flowing through passageway 130 is forced to flow through the electric arc which generates a high temperature plasma jet 140 which is discharged from the torch/gun via nozzle 150. The shell and core particles are introduced via inlet 160 into the jet 140 resulting in at least partial consumption of the outer shell. The particles are directed towards the substrate 170 where they form a coating 180. Fig. 1 shows the shell and core particles introduced via injector 160 into the jet 140 as a cross flow after the jet has existed the nozzle 150. Alternatively, the monociliate shell and core particles can be introduced via an inlet 190 into the jet 140 at the nozzle 150, i.e., as the jet is existing the nozzle.

In an exemplary embodiment of a method aspect of the present disclosure, in a plasma spray device a plasma formation gas (e.g., argon) is made to flow through between an anode and a cathode separated by a flow channel. Applying a voltage to the anode and cathode causes the flowing plasma formation gas to form a plasma. A plasma jet is discharged from a plasma spray nozzle and a powder composition containing particles having a core-shell structure are injected into the plasma jet. The particles have a Zr-silicate inner core and a PMMA outer shell. During particle flight through the plasma jet, at least a portion of the PMMA shell is consumed and the Zr-silicate inner core becomes at least partially molten. The at least partially molten particles are deposited on the surface of a CMC substrate.

Generally, the powder compositions and methods described herein can be advantageous in terms of preserving the silicate/phosphate chemistry of the particles. Such preservation of chemistry can in turn result in maximizing material performance for the resultant coatings.

For EBC coatings, using the shell and core particles of the present disclosure can aid in the formation of coatings that exhibit little or no cracking, and reduce the number of oxide particles subject to volatilization of silica/phosphate, thereby preserving the silicate/phosphate chemistry. Further, using the shell and core particles of the present disclosure can yield coatings having a significant retention of crystalline phase (e.g., more than 95%).

For abradable systems, using the shell and core particles of the present disclosure can yield coatings with distinct features such as splat like pores formed by the residual shell (e.g., polymer) and lower levels of pure crystalline phase compared to the EBC coatings (e.g., 80% or less).

The corresponding structures, material, acts, and equivalents of all means or steps plus function elements in the claims below are intended to include any structure, material, or act for performing the function in combination with other claimed elements are specifically claimed. The description of the present invention has been presented for purposes of illustration and description, but is not intended to be exhaustive or limited to the invention in the form disclosed. Many modifications and variations will be apparent to those of ordinary skill without departing from the scope and spirit of the invention. The embodiment was chosen and described in order to best explain the principles of the invention and the practical application, and to enable others of ordinary skill in the art to understand the invention for embodiments with various modifications as are suited to the particular use contemplated.

Modifications and equivalents may be made to the features of the claims without departing from the spirit or scope of the invention. Thus, it is intended that the present invention covers the modifications and variations disclosed above provided that these changes come within the scope of the claims and their equivalents.

## Claims

1. A powder composition comprising:
particles having a core-shell structure with an inner core particle (20) and an outer particle shell (10) wherein, in each case,
the inner core particle (20) is a Hf-silicate (HfSiO₄), a Zr-silicate (ZrSiO₄), a rare earth monosilicate (RE₂SiO₅), a rare earth disilicate (RE₂Si₂O₇), or a rare earth phosphate (REPO₄) particle, wherein RE is Sc, Y, La, Ce, Pr, Nd, Pm, Sm, Eu, Gd, Tb, Dy, Ho, Er, Tm, Yb, or Lu, and
the outer particle shell (10) provides protection of the inner core particle (20) from plasma and plume environments during air plasma spraying.

2. A method for applying a silicate-based or phosphate-based coating (60; 180) to a substrate (50; 170) comprising:
coating a substrate (50; 170) by subjecting a powder composition containing silicate or phosphate particles to air plasma spraying,
wherein the particles have a core-shell structure comprising an inner core particle (20) and an outer particle shell (10) wherein, in each case,
the inner core particle (20) is a Hf-silicate (HfSiO₄), a Zr-silicate (ZrSiO₄), a rare earth monosilicate (RE₂SiO₅), a rare earth disilicate (RE₂Si₂O₇), or a rare earth phosphate (REPO₄) particle, wherein RE is Sc, Y, La, Ce, Pr, Nd, Pm, Sm, Eu, Gd, Tb, Dy, Ho, Er, Tm, Yb, or Lu, and
the outer particle shell (10) provides protection of the inner core particle (20) from plasma and plume environments during air plasma spraying.

3. The powder composition according to claim 1, or the method according to claim 2, wherein the outer particle shell (10) has a composition and/or thickness such that at least part of the outer particle shell (10) will survive air plasma spraying.

4. The powder composition or method according to claim 3, wherein the outer particle shell composition comprises a polymer, a metal, or a ceramic.

5. The powder composition or method according to claim 3, wherein the outer particle shell composition comprises polyester, poly(methyl methacrylate), Al, a rare earth metal, BN, Al₂O₃, or rare earth oxide

6. The powder composition according to claim 1 or method according to claim 2, wherein the outer particle shell (10) has a composition and/or thickness such that the outer particle shell (10) is consumable during air plasma spraying.

7. The powder composition or method according to claim 6, wherein the outer particle shell composition comprises a polymer, a metal, or a ceramic.

8. The powder composition or method according to claim 6, wherein the outer particle shell composition comprises polyester, poly(methyl methacrylate), Si, or SiO₂.

9. The powder composition or method according to any preceding claim, wherein the particles have a nominal diameter of 20 to 150 µm.

10. The powder composition or method according to any preceding claim, wherein the outer particle shell (10) of the particles has a thickness of 2-25 µm.

11. The powder composition or method according to any preceding claim, wherein the outer particle shell (10) makes up less than 40 vol.% of the total volume of the particle.

12. A method of preparing a particulate composition comprising:
preparing particles having a core-shell structure with an inner core particle (20) and an outer particle shell (10) wherein, in each case,
the inner core particle (20) is a Hf-silicate (HfSiO₄), a Zr-silicate (ZrSiO₄), a rare earth monosilicate (RE₂SiO₅), a rare earth disilicate (RE₂Si₂O₇), or a rare earth phosphate (REPO₄) particle, wherein RE is Sc, Y, La, Ce, Pr, Nd, Pm, Sm, Eu, Gd, Tb, Dy, Ho, Er, Tm, Yb, or Lu, and
the outer particle shell (10) provides protection of the inner core particle (20) from plasma and plume environments during air plasma spraying; and
subjecting said particles having a core-shell structure to air plasma spraying to produce a particulate composition.

13. The method of claim 12, the particles of the particulate composition produces by said subjecting said particles having a core-shell structure to air plasma spraying contain at least a portion of the outer particle shell (10) of the particles having a core-shell structure.
